Europäisches Patentamt

European Patent Office

Office européen des brevets

(11) Veröffentlichungsnummer: **0 321 651**
**A1**

## EUROPÄISCHE PATENTANMELDUNG

(21) Anmeldenummer: 88113296.3

(22) Anmeldetag: 17.08.88

(51) Int. Cl.⁴ **H01B 7/36 , H01B 7/08 , H05B 3/56 , G01K 7/00**

(30) Priorität: 22.12.87 DE 3743470

(43) Veröffentlichungstag der Anmeldung:
28.06.89 Patentblatt 89/26

(84) Benannte Vertragsstaaten:
AT CH GB IT LI

(71) Anmelder: **KABELMETAL ELECTRO GMBH**
**Kabelkamp 20 Postfach 260**
**D-3000 Hannover 1(DE)**

(72) Erfinder: **Obermeier, Manfred**
**Südring 35**
**D-8501 Eckental(DE)**
Erfinder: **Herrmann, Erhard**
**Erhardshöhe 1**
**D-8501 Heroldsberg(DE)**

(54) Verfahren zur Herstellung eines Kabels.

(57) Es wird ein Verfahren zum Anbringen von Markierungen (15) auf einem undurchsichtigen Schutzmantel eines Kabels (1) angegeben, mittels derer in der Seele (12) des Kabels (1) vorhandene, mit axialem Abstand zueinander angeordnete Teile leicht auffindbar sind. In der Seele (12) wird dazu mit definiertem Abstand zu den Teilen in axial eng begrenzten Bereichen magnetisierbares metallisches Material angebracht. Die die Markierungen (15) aufbringende Vorrichtung (14) wird von einem vorgeschalteten Sensor (16) gesteuert, der jeweils das metallische Material erkennt und ein Steuersignal an die Vorrichtung (14) gibt.

Fig. 7

EP 0 321 651 A1

Die Erfindung bezieht sich auf ein Verfahren zur Herstellung eines Kabels, in dessen von einem Schutzmantel aus undurchsichtigem Isoliermaterial umgebener Seele elektrische Leiter und/oder Lichtwellenleiter angeordnet sind und bei welchem in der Seele über die ganze Länge des Kabels verteilt mit axialem Abstand zueinander Sonderteile angebracht sind.

Kabel mit "Sonderteilen" können beispielsweise Heizkabel, Meßkabel oder Kabel mit einer Bandleitung als Seele sein. Bei Heizkabeln können die "Sonderteile" parallel verlaufende Stellen von mindestens zwei Leitern sein, an denen ein Heizabschnitt endet. Bei Meßkabeln können beispielsweise magnetfeld- oder temperaturempfindliche Sensoren die "Sonderteile" darstellen. Bei Kabeln mit einer Bandleitung als Seele können die "Sonderteile" Verbindungsstellen sein, in denen die Leiter der Bandleitung - metallische Leiter oder Lichtwellenleiter -miteinander verbunden sind. In allen Fällen sind die für einen späteren Gebrauch des Kabels benötigten "Sonderteile" von außen nicht ohne Weiteres erkennbar und daher nur unter Schwierigkeiten zu finden. Die Kabel werden daher meist an einer falschen Stelle geschnitten, so daß oft erheblicher Verschnitt anfällt, der nicht mehr zu gebrauchen ist. Zur weiteren Darstellung dieser Problematik wird im folgenden - stellvertretend für alle anderen möglichen Einsatzfälle - auf Kabel mit einer Bandleitung als Seele eingegangen, deren die Leiter zusammenhaltende Verbindungsstellen zur einfachen Kontaktierung bei einem Schnitt durch das Kabel mit großer Genauigkeit auffindbar sein sollen.

Bei den für solche Kabel verwendeten Bandleitungen sind die Leiter in axialen Abständen beispielsweise durch Bänder zusammengehalten. Sie liegen in den dadurch geschaffenen Verbindungsstellen mit festem Raster nebeneinander. Zwischen je zwei Verbindungsstellen sind die Leiter nicht miteinander verbunden, so daß die Bandleitung sehr flexibel ist. Das gilt auch, wenn die Leiter zwischen den Verbindungsstellen paarweise miteinander verseilt sind. Diese Kabel vereinigen die Vorteile von runden Kabeln einerseits und Bandleitungen - also flachen Leitungen - andererseits auf vorteilhafte Weise. Dort wo längere Strecken überbrückt werden sollen und wo gute Biegbarkeit erforderlich ist, wird das runde Kabel eingesetzt. Seine Biegbarkeit wird durch die Bandleitung nicht behindert, da dieselbe als runde Seele ebenfalls gut biegbar ist. An den Enden des Kabels, an welchen die Leiter durchverbunden werden sollen, kommt der Vorteil der Bandleitungen zum Tragen, in denen die Leiter in den Verbindungsstellen mit festem Raster nebeneinander liegen. Die Verbindung der Leiter kann dadurch automatisch durchgeführt werden. Es können insbesondere vorbereitete Verbindungsleisten eingesetzt werden. Ein weiterer Vorteil dieser Kabel besteht darin, daß die Leiter insgesamt besonders einfach elektrisch abgeschirmt werden können, da ein entsprechender Schirm nur um die runde Kabelseele herumgeformt zu werden braucht. Das ist insbesondere bei Kabeln mit metallischen Leitern von Bedeutung.

Ein Kabel mit einer derartigen Bandleitung als Seele geht beispielsweise aus der DE-OS 35 19 354 hervor. Zum Anschluß der Leiter der Bandleitung muß das Kabel geschnitten werden. Die Seele muß dabei so weit freigelegt werden, daß eine Verbindungsstelle gut zugänglich ist. Damit das Kabel an der richtigen Stelle, d. h. in der Nähe einer Verbindungsstelle der Bandleitung, geschnitten werden kann, müssen die Verbindungsstellen, zumindest aber der Bereich, in dem eine Verbindungsstelle liegt, von außen erkennbar sein. Bei den bisher bekannten Kabeln sind die entsprechenden Bereiche von erfahrenen Personen dadurch zu erkennen, daß die Kabel mehrmals hin- und hergebogen werden. Die Bereiche der Verbindungsstellen sind dann als "steife" Bereiche erkennbar. Ganz davon abgesehen, daß diese Methode nur von geübten Personen durchführbar ist, stellt sie auch eine erhebliche Belastung des Kabels dar, die zu einer Beschädigung der Leiter führen kann. Das gilt insbesondere dann, wenn in der Seele des Kabels mechanisch empfindliche Lichtwellenleiter vorhanden sind.

Der Erfindung liegt die Aufgabe zugrunde, ein Verfahren zur Herstellung eines Kabels mit in axialem Abstand angebrachten Sonderteilen (Verbindungsstellen einer Bandleitung) anzugeben, mit dem auf einfache Weise sichergestellt ist, daß die Stellen, an denen sich die Sonderteile befinden, auch von ungeübten Personen im Verlauf des Kabels von außen erkennbar sind.

Diese Aufgabe wird mit einem Verfahren der eingangs geschilderten Art gemäß der Erfindung dadurch gelöst,
- daß an mindestens einem Bauteil der Seele vor Aufbringung des Schutzmantels jeweils zwischen zwei Sonderteilen in einem axial eng begrenzten Bereich magnetisierbares metallisches Material angebracht wird,
- daß die Bereiche mit dem metallischen Material jeweils einen definierten, über die ganze Länge des Kabels gleichbleibenden Abstand von den Sonderteilen haben und
- daß nach Fertigstellung des Schutzmantels Markierungen mittels einer Vorrichtung auf demselben angebracht werden, die über einen auf das metallische Material reagierenden Sensor gesteuert wird.

Durch den Einsatz dieses Verfahrens sind auf dem Schutzmantel des Kabels Markierungen angebracht, durch welche jeder Laie erkennen kann, an welcher Stelle im Verlauf des Kabels die Sonderteile, also beispielsweise die Verbindungsstellen einer Bandleitung, liegen. Die Vorrichtung, mit welcher die Markierungen auf dem Schutzmantel angebracht werden, läßt sich durch den Sensor so genau steuern, daß die Markierungen beispielsweise direkt über den Sonderteilen liegen. Es ist dabei auch möglich, den Abstand zwischen den Sonderteilen zu variieren, solange der Abstand des metallischen Materials zu dem im fertigen Kabel zu kennzeichnenden Sonderteil nicht geändert wird. Das Verfahren arbeitet also unabhängig vom Abstand der Sonderteile im Kabel voneinander. Von Bedeutung ist dabei auch, daß das metallische Material in einem axial eng begrenzten Bereich von beispielsweise 2 mm angebracht wird, damit ein fehlerfreies und verwechslungssicheres Erkennen desselben durch den Sensor gewährleistet werden kann.

Vorteilhafte Ausgestaltungen der Erfindung gehen aus den Unteransprüchen hervor.

Das Verfahren nach der Erfindung wird an Hand der Zeichnungen als Ausführungsbeispiel erläutert. Es wird dabei wieder stellvertretend für allen anderen Einsatzmöglichkeiten auf ein Kabel mit einer Bandleitung als Seele eingegangen.

Es zeigen:

Fig. 1 einen Abschnitt eines mit dem Verfahren hergestellten Kabels mit herausragender Bandleitung.

Fig. 2 eine als Kabelseele verwendbare Bandleitung.

Fig. 3 und 4 Querschnitte des Kabels in unterschiedlichen Ausführungsformen in vergrößerter Darstellung.

Fig. 5 und 6 zwei unterschiedliche Ausführungsformen zur Anbringung Materials.

Fig. 7 eine Vorrichtung zur Durchführung des Verfahrens in schematischer Darstellung.

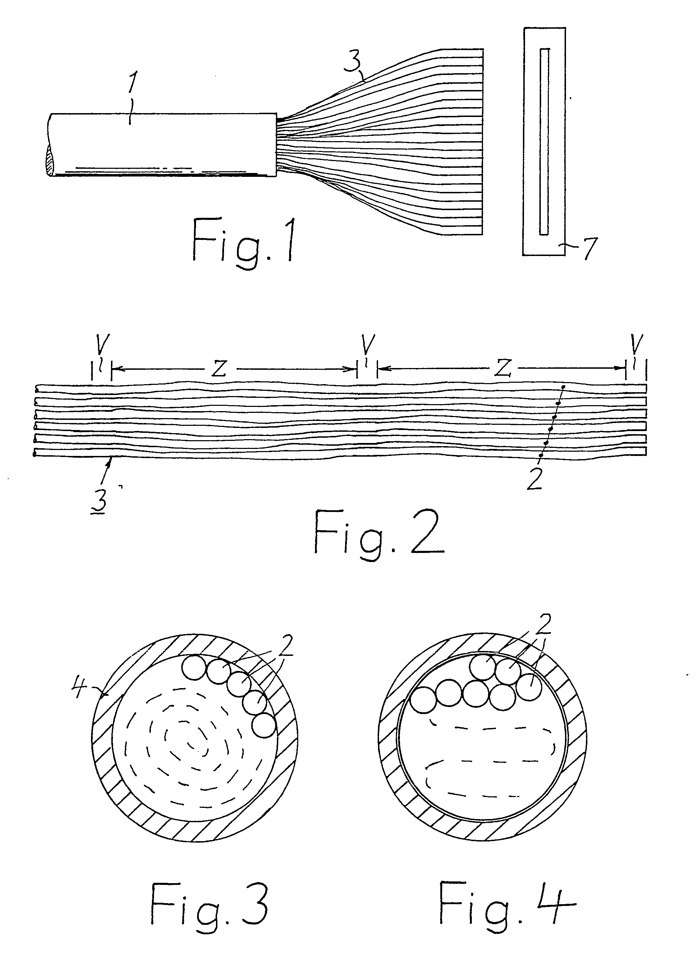

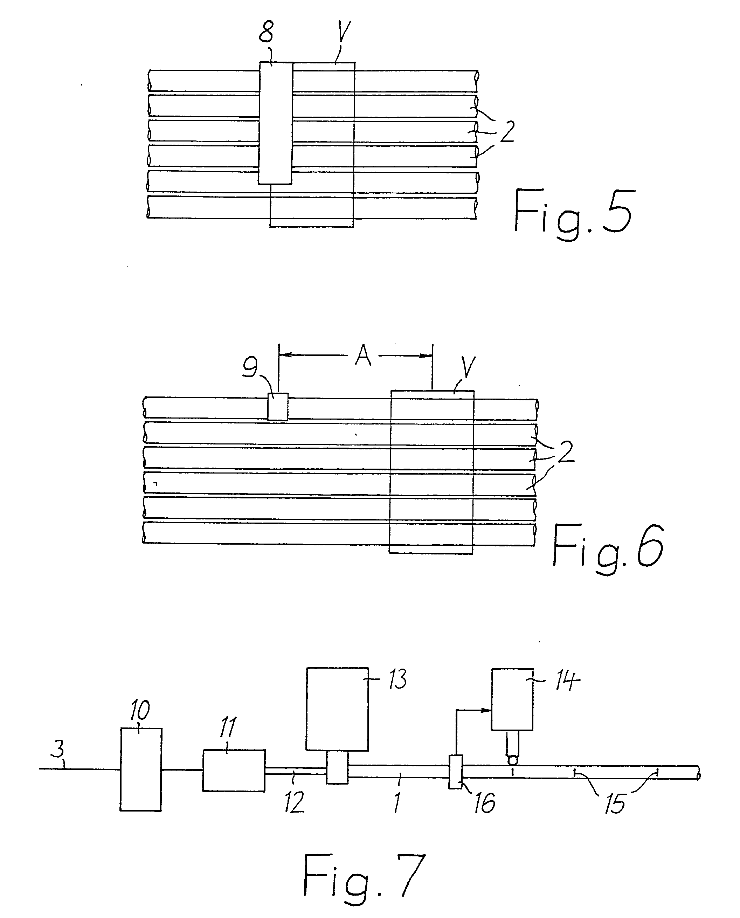

In einem zur Übertragung von Signalen verwendbaren Kabel 1 ist eine Vielzahl von Leitern 2 angebracht, die in Form einer Bandleitung 3 zusammengefaßt sind. "Leiter" können dabei sowohl isolierte elektrische Leiter als auch Lichtwellenleiter sein. Die Bandleitung 3 stellt die Seele des Kabels 1 dar, über welcher ein vorzugsweise aus Kunststoff bestehender Schutzmantel 4 (Fig. 3 und 4) angebracht ist. Es kann über der Seele auch ein vom Schutzmantel 4 umschlossener Schirm 5 (Fig. 4) angeordnet sein, der vorzugsweise als Drahtgeflecht ausgebildet ist. Für den Schirm 5 können Kupferdrähte verwendet werden, die auch verzinnt sein können. Es ist auch möglich, den Schirm 5 aus einer Aluminiumfolie mit darüber liegendem Drahtgeflecht aufzubauen.

Die Bandleitung 3 besteht aus einer Vielzahl von Leitern 2, die in gestrecktem Zustand der Bandleitung 3 parallel zueinander verlaufend nebeneinander angeordnet sind. In dem Ausführungsbeispiel nach Fig. 2 sind nur sechs Leiter 2 dargestellt. Diese Anzahl wurde der Einfachheit halber gewählt. Es können auch weniger aber auch mehr, insbesondere wesentlich mehr, als sechs Leiter in einer Bandleitung 3 zusammengefaßt sein. Dazu sind die Leiter 2 in axial kurzen Verbindungsstellen V so nebeneinander festgelegt, daß sie in den Verbindungsstellen V mit vorgegebenem Raster nebeneinander liegen. Im Verlauf der Bandleitung 3 sind über ihre ganze Länge mit relativ großem axialem Abstand voneinander Verbindungsstellen V angebracht. Zwischen je zwei Verbindungsstellen V sind die Leiter 2 nicht miteinander verbunden, sondern frei beweglich. Die Zwischenräume zwischen zwei Verbindungsstellen sind mit Z bezeichnet. Ihre Länge kann sich zur axialen Länge der Verbindungsstellen V beispielsweise wie 20 : 1 verhalten.

In den Verbindungsstellen V liegen die Leiter 2 mit einem genau einstellbaren Raster fest. Wenn die Bandleitung 3 nach Entfernen des Schutzmantels 4 in einer der Verbindungsstellen V durchtrennt und entsprechend Fig. 1 ausgebreitet wird, dann liegen die Leiter 2 am Ende entsprechend dem eingestellten Raster vor. Es kann dann auf das ende der Bandleitung 3 eine vorbereitete Verbindungsleiste 7 aufgebracht werden, die in Fig. 1 schematisch angedeutet ist. In der Verbindungsleiste 7 ist eine der Anzahl der Leiter 2 entsprechende Anzahl von Verbindungselementen vorhanden, die im gleichen Raster wie die Leiter 2 liegen.

An der Bandleitung 3 ist magnetisierbares metallisches Material angebracht, und zwar mit fester Zuordnung zu den Verbindungsstellen V. Das metallische Material ist in bevorzugter Ausführungsform Reineisen. Gemäß Fig. 5 können als metallisches Material Streifen 8 verwendet werden, die zweckmäßig innerhalb der Verbindungsstellen V quer zu den Leitern 2 verlaufen. Die Streifen können beispielsweise aus Reineisenpulver bestehen, das durch einen Kleber zusammengehalten wird. Geeignet ist beispielsweise ein Kleber auf der Basis von Polyvinylchlorid. An den Verbindungsstellen V behindern die Streifen 8 die freie Beweglichkeit der Leiter 2 nicht. Das Reineisenpulver kann auch auf Folien oder andere flexible Träger aufgebracht werden. Es ist auch möglich, das mit einem Kleber vermengte Reineisenpulver direkt auf die Verbindungsstellen V aufzutragen. In allen Fällen muß sichergestellt sein, daß das metallische Material gut biegbar ist und bleibt und insbesondere nicht versprödet, damit es alle Bewegungen des Kabels bei dessen Herstellung und Weiterverarbeitung unbeschadet übersteht. Bei dem geschilderten Aufbau des metallischen Materials ist das Reineisenpulver gut isoliert eingebettet, so daß es elektrisch nicht stören kann. Wenn das metallische Material an einer Verbindungsstelle angebracht wird, hat es zu derselben den gleichbleibenden Abstand "Null".

Als metallisches Material können nach Fig. 6 auch Klammern 9 verwendet werden, die in bevorzugter Ausführungsform wieder aus Reineisen bestehen und stets in einem festen Abstand A zu der zugehörigen Verbindungsstelle V beispielsweise an einem der äußeren Leiter 2 der Bandleitung 3 angebracht werden können. Prinzipiell kann im Verlauf der Bandleitung 3 als metallisches Material jede geeignete Metalleinlage aus magnetisierbarem Metall angebracht werden, solange sichergestellt ist, daß dieselbe stets den gleichen Abstand zu einer zugehörigen Verbindungsstelle V hat und mittels eines verfügbaren Sensors eindeutig erfaßt werden kann. Das metallische Material kann also auch an einem von der Bandleitung 3 unabhängigen Strang in der Seele des Kabels 1 angebracht sein.

Das Kabel nach den Fig. 1, 3 und 4 wird beispielsweise wie folgt hergestellt:

Eine vorgefertigte Bandleitung 3, wie sie beispielsweise in Fig. 2 dargestellt ist, wird einer Station 10 zugeführt, in der metallisches Material 8 oder 9 an derselben angebracht wird. Die so bestückte Bandleitung 3 gelangt danach in eine Station 11, in welcher sie im Bereich der Verbindungsstellen V zu einem etwa runden Gebilde geformt wird. Dazu können die Verbindungsstellen V beispielsweise quer gewickelt (Fig. 3) oder mit unterschiedlichen Amplituden gefaltet (Fig. 4) werden. In den mit Z bezeichneten Bereichen werden die Leiter 2 der Bandleitung 3 dann ebenfalls zu einem etwa runden Gebilde geformt.

Aus der Station 11 tritt die Bandleitung 3 als Seele 12 aus, auf die mittels eines Extruders 13 der Schutzmantel 4 aufgebracht wird. Vorher kann über der Seele 12 gegebenenfalls noch der Schirm 5 angebracht werden.

Das fertige Kabel 1 gelangt vom Extruder 13 aus zu einer Vorrichtung 14, durch welche auf den Schutzmantel 4 des Kabels 1 Markierungen 15 aufgebracht werden. Die Markierungen 15 können beispielsweise als Striche, Punkte, Kreuze oder Texte ausgeführt sein, die aus einer auf dem Schutzmantel 4 gut haftenden Farbe bestehen. Sie liegen jeweils im unmittelbaren Bereich einer Verbindungsstelle V der vom Schutzmantel 4 umschlossenen Bandleitung 3 oder in einem bekannten Abstand zu derselben.

Damit die Markierungen 15 stets an der richtigen Stelle des Kabels 1 angebracht werden, wird die Vorrichtung 14 von einem - in Abzugsrichtung des Kabels 1 gesehen - vor dem Extruder 14 angeordneten, auf das metallische Material 8 bzw. 9 reagierenden Sensor 16 gesteuert. Der Sensor 16 kann beispielsweise als induktiver Geber, insbesondere als Meßbrücke, ausgeführt sein. Er reagiert auf die Feldänderung, die jedesmal hervorgerufen wird, wenn das metallische Material 8 bzw. 9 der Seele 12 an ihm vorbeigezogen bzw. bei Ausführung des Sensors 16 als Spule durch dieselbe hindurchgezogen wird. Die Meßbrücke des Sensors 16 wird beispielsweise aus einem Wechselstromgenerator mit 3 kHz gespeist. Durch die festgestellte Feldänderung gibt der Sensor 16 ein Steuersignal an die Vorrichtung 14. Mit einer entsprechenden Verzögerung wird dann von der Vorrichtung 14 eine Markierung 15 auf das Kabel 1 aufgebracht. Die dazu erforderliche Versatzstrecke kann sehr genau eingestellt werden. Sie richtet sich nach dem bekannten Abstand zwischen dem metallischen Material 8 oder 9 und der zu markierenden Verbindungsstelle V einerseits sowie der Abzugsgeschwindigkeit des Kabels 1 andererseits.

In der Bandleitung 3 können die Leiter 2 zwischen je zwei Verbindungsstellen V auch paarweise miteinander verdrillt sein. In je zwei aufeinander folgenden Abschnitten Z kann die Schlagrichtung der Verdrillung dabei auch entgegengesetzt sein. Auch bei dieser Ausführungsform der Bandleitung 3 liegen die Leiter 2 in den Verbindungsstellen V mit festem Raster in einer Ebene nebeneinander.

Mit diesem Verfahren können auch andere "Sonderteile" in Kabeln mit undurchsichtigem Schutzmantel markiert werden, wenn mit festem Abstand zu denselben magnetisierbares metallisches Material angebracht wird. Solche Sonderteile können entsprechend den weiter oben gegebenen Erläuterungen beispielsweise Parallelstellen in Heizleitungen oder magnetfeld- bzw. temperaturempfindliche Sensoren sein.

## Ansprüche

1. Verfahren zur Herstellung eines Kabels, in dessen von einem Schutzmantel aus undurchsichtigem Isoliermaterial umgebener Seele elektrische Leiter und/oder Lichtwellenleiter angeordnet sind, bei welchem in der Seele über die ganze Länge des Kabels verteilt mit axialem Abstand zueinander Sonderteile angebracht sind, dadurch gekennzeichnet,

- daß an mindestens einem Bauteil der Seele (12) vor Aufbringung des Schutzmantels (4) jeweils zwischen zwei Sonderteilen (V) in einem axial eng begrenzten Bereich magnetisierbares metallisches Material (8,9) angebracht wird,

- daß die Bereiche mit dem metallischen Material (8,9) jeweils einen definierten, über die ganze Länge des Kabels (1) gleichbleibenden Abstand von den Sonderteilen (V) haben und

- daß nach Fertigstellung des Schutzmantels (4) Markierungen (15) mittels einer Vorrichtung (14) auf demselben angebracht werden, die über einen auf das metallische Material (8,9) reagierenden Sensor (16) gesteuert wird.

2. Verfahren nach Anspruch 1, dadurch gekennzeichnet, daß als metallisches Material (8,9) Reineisen verwendet wird.

3. Verfahren nach Anspruch 1 oder 2, dadurch gekennzeichnet, daß als Sensor (16) ein mit Wechselstrom von beispielsweise 3 kHz gespeister induktiver Geber verwendet wird.

4. Verfahren nach einem der Ansprüche 1 bis 3, dadurch gekennzeichnet, daß das metallische Material als bewegliches, Reineisenpulver enthaltendes Gebilde, beispeilsweise in Form von Streifen (8), jeweils in einer Verbindungsstelle (V) angebracht wird.

5. Verfahren nach einem der Ansprüche 1 bis 3, dadurch gekennzeichnet, daß an einem der Leiter (2) der Bandleitung (3) jeweils zwischen zwei Verbindungsstellen (V) metallische Klammern (9) angebracht werden.

6. Verfahren nach einem der Ansprüche 1 bis 3, dadurch gekennzeichnet, daß das metallische Material (8,9) an einem gesonderten Strang in der Seele (12) angebracht wird.

7. Verwendung des Verfahrens nach einem der Ansprüche 1 bis 6 zur Markierung eines Kabels (1), in dessen Seele (12) eine Bandleitung (3) angebracht ist, deren Leiter (2) in mit axialem Abstand zueinander angebrachten Verbindungsstellen (V) mit vorgegebenem Raster nebeneinander liegend zusammengehalten sind.

8. Verwendung des Verfahrens nach einem der Ansprüche 1 bis 6 zur Markierung eines Kabels (1), in dem eine Heizleitung mit Heizabschnitten angeordnet ist, an deren Enden jeweils parallel verlaufende Leiter vorliegen.

9. Verwendung des Verfahrens nach einem der Ansprüche 1 bis 6 zur Markierung eines Kabels (1), in dessen Seele mit axialem Abstand zueinander magnetfeld-oder temperaturempfindliche Sensoren angebracht sind.

Fig.1

Fig.2

Fig.3          Fig.4

Fig.5

Fig.6

Fig.7

87-77/S

| | EINSCHLÄGIGE DOKUMENTE | | EP 88113296.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | PATENT ABSTRACTS OF JAPAN, unexamined applications, E Sektion, Band 2, Nr. 120, 6. Oktober 1978 THE PATENT OFFICE JAPANESE GOVERNMENT Seite 7 017 E 78 * Kokai-Nr. 53-86 482 (HITACHI DENSEN K.K.) * -- | 1 | H 01 B 7/36 H 01 B 7/08 H 05 B 3/56 G 01 K 7/00 |
| A | DE - A1 - 2 808 438 (GUTE HOFFNUNGSHÜTTE) * Seite 12, Zeilen 16-24 * -- | 1 | |
| D,A | DE - A1 - 3 522 335 (KABELMETAL ELECTRO) * Ansprüche; Fig. 2-6 * ---- | 1,7 | |
| | | | RECHERCHIERTE SACHGEBIETE (Int. Cl.4) H 01 B G 02 B 6/00 H 05 B 3/00 G 01 K 7/00 F 16 L 55/00 |

Der vorliegende Recherchenbericht wurde für alle Patentansprüche erstellt.

| Recherchenort | Abschlußdatum der Recherche | Prüfer |
|---|---|---|
| WIEN | 16-03-1989 | KUTZELNIGG |